# FASCICULE DE BREVET EUROPEEN

(11) **EP 1 622 944 B1**
(45) Date de publication et mention de la délivrance du brevet: **31.07.2013**
(21) Numéro de dépôt: 04742699.4
(22) Date de dépôt: 11.05.2004
(51) Int. Cl.: C08B 31/12, C09J 103/08, C08L 3/08, D21H 17/29, C02F 1/56

(54) **PROCEDE DE CATIONISATION D'AMIDONS ISSUS DE LEGUMINEUSES, AMIDONS CATIONIQUES AINSI OBTENUS ET LEURS APPLICATIONS**
VERFAHREN ZUR KATIONISIERUNG VON LEGUMINOSENSTÄRKEN, SO ERHALTENE KATIONISCHE STÄRKEN UND ANWENDUNGEN DAVON
METHOD FOR THE CATIONISATION OF LEGUME STARCHES, CATIONIC STARCHES THUS OBTAINED AND APPLICATIONS THEREOF

(30) Priorité: 12.05.2003 FR 0305714
(43) Date de publication de la demande: 08.02.2006
(73) Titulaire: Roquette Frères, 62136 Lestrem (FR)
(72) Inventeur: LADRET, Marika, F-59840 Lompret (FR); DOBROGOSZCZ, Edmond, F-62980 Vermelles (FR); GOMBERT, Hervé, F-62232 HINGES (FR); SABRE, Philippe, F-59270 Saint Jans Cappel (FR)
(74) Mandataire: Cabinet Plasseraud
(86) Numéro de dépôt international: PCT/FR2004/001143
(87) Numéro de publication internationale: WO 2004/101623

(56) Documents cités:
- WO-A-01/96403
- WO-A-96/09327
- WO-A-02/074814
- US-A- 3 422 087
- US-A1- 2002 139 501
- US-A1- 2002 170 693
- C. YOOK ET AL.: "Effects of cationization on functional properties of pea and corn starches" STARCH-STÄRKE, vol. 46, no. 10, 1994, pages 393-399, XP008043814

## Description

La présente invention a pour objet un procédé de cationisation d'un amidon de légumineuses, en l'absence de tout solvant organique.

Elle vise également les amidons cationiques issus de légumineuses obtenus selon ledit procédé, la plupart d'entre eux constituant de nouveaux produits industriels.

La présente invention concerne aussi les utilisations desdits amidons cationiques issus de légumineuses, notamment dans l'industrie papetière, dans la partie connue de l'homme de l'art comme la partie humide de la machine à papier.

Elle concerne enfin le papier ou le carton plat obtenus par mise en oeuvre de ces amidons cationiques.

Par « légumineuses » au sens de la présente invention, on entend plus particulièrement la famille des papilionacées, dont les représentants les plus importants sont le haricot, le pois, la lentille, la fève, la luzerne, le trèfle, le lupin.

Par « amidon de légumineuses », au sens de l'invention, on entend les amidons extraits de légumineuses, en particulier, du pois, présentant une richesse en amidon élevée, notamment supérieure à 90% (sec/sec), assortie d'une teneur en matières colloïdales et en résidus fibreux, généralement faible, par exemple inférieure à 1% (sec/sec).

La richesse en amidon est de préférence supérieure à 95%, de préférence encore, supérieure à 98% (sec/sec).

Parallèlement, la teneur en protéines est faible, soit inférieure à 1%, préférentiellement inférieure à 0,5% et, plus particulièrement, comprise entre 0,1 et 0,35% (sec/sec).

La cationisation d'amidons de céréales ou de tubercules est extrêmement répandue, notamment pour l'obtention de dérivés cationiques très utiles à l'industrie papetière.

L'utilisation d'amidons de maïs cationiques est extrêmement courante.

Dans un premier temps, de faibles degrés de substitution suffisaient, correspondant à l'utilisation des amidons cationiques dans des circuits de machines à papier peu fermés.

Au fur et à mesure de l'accélération du recyclage des eaux et de la fermeture desdits circuits nécessaire pour répondre à la montée des contraintes et exigences liées à la qualité de l'environnement, est apparue, toujours plus impérieuse, la nécessité d'augmenter sensiblement, voire très sensiblement, les degrés de substitution de ces amidons de maïs cationiques.

Graduellement, au cours de l'évolution ainsi générée, touchant la pratique pour la fabrication, dans son ensemble, des différentes qualités de papiers et cartons plats, les insuffisances de ces dérivés cationiques à base d'amidon de maïs sont devenues plus évidentes.

En premier lieu, la réactivité modeste des amidons de maïs vis-à-vis des amines tertiaires et des dérivés d'ammonium quaternaire utilisés entraîne, pour des degrés de substitution relativement élevés, des rendements faibles, difficilement compatibles, de par la présence importante de résidus de réactifs, et du point de vue de l'environnement, avec la réglementation et sa sévérité croissante.

La possibilité offerte de conduire la réaction en phase sèche n'améliore pas les rendements et ne diminue pas, de fait, les quantités de réactif résiduelles générées.

En outre, à l'utilisation, l'homme de l'art est souvent contraint, pour une bonne efficacité de l'amidon de maïs cationique, de reculer son point d'addition à la suspension fibreuse pour augmenter sensiblement les temps de contact dudit amidon avec la cellulose avant l'arrivée en caisse de tête de la machine à papier et la formation dudit papier.

Cette augmentation est d'autant plus justifiée que la fixation sur la cellulose devient difficile du fait du circuit fermé, que le taux de recyclage est important, ces éléments étant à corréler à un affaiblissement mécanique de la fibre et à une dégradation de sa réceptivité à l'amidon cationique, notamment en comparaison à certaines autres bases.

L'amidon de blé, parallèlement, présente des inconvénients similaires.

Entre-temps, se sont développés des amidons, notamment de maïs hybride, qu'ils soient riches en amylose ou en amylopectine. Leurs dérivés cationiques laissent subsister des problèmes identiques, outre le fait de leur coût généralement plus élevé.

La cationisation de la fécule de pomme de terre est techniquement plus satisfaisante. Les rendements réactionnels sont sensiblement plus élevés et permettent, tant de réduire la quantité de résidus de réaction que d'augmenter plus aisément les degrés de substitution.

Toutefois, un premier inconvénient à leur utilisation peut résider en ce que les sols de fécule de pomme de terre cationique exigent une addition à la suspension fibreuse, à l'inverse des amidons de céréales, la plus proche possible de la caisse de tête.

Sur un tout autre plan, on constate que les approvisionnements en fécule de pomme de terre deviennent difficiles, essentiellement, de par les coûts d'extraction ainsi que par la réglementation qui leur est appliquée.

D'autres sources d'amidons peuvent être envisagées telles que le riz ou le manioc. Elles sont encore, le plus souvent, assez peu accessibles et / ou de qualité irrégulière.

Consciente de ces problèmes, la Demanderesse a déjà recherché, par le passé, des solutions d'intérêt.

En particulier, le brevet européen EP 0 139 597 décrit des additifs de masse pour le papier élaborés à partir de mélanges d'au moins un amidon de céréales et d'au moins un amidon de tubercule, cationiques. De façon surprenante et inattendue, ceux-ci sont susceptibles de présenter des synergies, notamment en termes de caractéristiques physiques et de rétention.

Toutefois, il est clair que lesdits mélanges, qu'ils soient réalisés à partir d'amidons soumis ensemble ou séparément à l'action du réactif cationique, engendrent, dans la gestion des matières premières et à la fabrication, des difficultés supplémentaires.

Ainsi, il existe un réel besoin à rechercher d'autres sources d'amidons qui puissent être aisément accessibles, faciles à transformer, notamment dans le cadre de rendements réactionnels satisfaisants et qui présentent, pour le moins, après cationisation, des facultés de fixation rapide, forte et solide sur la cellulose, que celle-ci soit de source noble ou de récupération cela, même dans le cadre de circuits papetiers très fermés.

Au-delà, bien évidemment, la nécessité reste impérative, pour d'éventuelles sources d'amidon destinées à être fonctionnalisées de cette manière, de répondre au mieux à l'ensemble du cahier des charges et à toutes les propriétés que l'homme de l'art est en droit de s'attendre à trouver dans les amidons cationiques.

C'est ainsi que, dans le cadre même de l'utilisation courante des amidons cationiques dans la masse, en l'ajoutant à l'entrée de la caisse de tête (« head box ») de la machine à papier ou, éventuellement, par introduction en un point situé en amont de celle-ci, en cuvier machine (« machine chest ») ou en cuvier mélange (« mixing chest »), voire en pulpeur (« pulper ») ou en cuvier cassés (« broke chest »), un amidon cationique doit trouver sa justification à l'amélioration d'au moins un groupe de caractéristiques d'intérêt relatives à :
- une rétention satisfaisante, voire optimale, des fines fibres et des charges, notamment minérales, garante d'un équilibre convenable du circuit, ainsi que d'un bon bilan, notamment économique des matières,
- un égouttage rapide du matelas fibreux, en lien direct avec la vitesse de la machine, ses performances et son bilan énergétique,
- des caractéristiques mécaniques du papier, dont les principales sont les résistances à la rupture ou à l'éclatement, la cohésion interne ou encore la rigidité, la rugosité ou le lissé,
- des propriétés optiques du papier, telles que par exemple, la blancheur, l'opacité ou, éventuellement, la brillance du papier,
- l'aptitude du papier à l'imprimabilité, appréhendée par des mesures d'intensité, de rendu ou de contraste des couleurs ou par la résistance à l'arrachage des fibres de surface,
- l'obtention d'un degré satisfaisant, dit de collage du papier, caractérisant le caractère hydrophobe, estimé par des tests généralement simples comme le collage Cobb ou le collage aux encres.

Sur ce dernier point, l'agent de collage utilisé demeure le facteur prépondérant de la qualité du collage du papier, qu'il s'agisse, en toute généralité, d'un agent réactif avec la cellulose ou non.

L'efficacité dudit agent de collage est toutefois particulièrement tributaire de la qualité de la composition généralement commercialisée sous forme de dispersion, de son maintien dans le temps, ainsi que de la stabilité et de l'efficacité de l'émulsion telle qu'elle est ajoutée à la suspension fibreuse.

Dans ce cadre, les amidons cationiques, couramment utilisés en tant que colloïdes protecteurs dans lesdites dispersions et émulsions, interviennent de façon majeure sur leurs propriétés.

Dans un ordre d'idées assez voisin, les amidons cationiques peuvent aussi être associés, par exemple, à des azurants optiques ou à des colorants pour en améliorer l'efficacité et le rendement, à des polymères synthétiques tels que les polyacrylamides ou les polyvinylamines, notamment dans le cadre du développement de synergies intéressantes.

Dans d'autres contextes, notamment papetiers encore, des amidons cationiques, éventuellement hydrolysés et pouvant présenter de ce fait des masses moléculaires moyennes en poids relativement réduites, de degrés de substitution (ou taux d'azote) généralement moyens à élevés, sont devenus, sous la forme de compositions solides, liquides ou pâteuses, par exemple, sous la forme d'une poudre s'écoulant librement, d'une émulsion ou d'une solution colloïdale, d'usage courant comme additif secondaire de papeterie ou comme additif de traitement des eaux industrielles.

Par « additif secondaire de papeterie » au sens de la présente invention, on entend tout additif autre qu'un additif principal de masse classique, utile en tant qu'agent de réduction des substances gênantes, notamment de nature anionique, contenues dans les circuits d'eau et / ou retenues sur les équipements des procédés papetiers.

Par « additif de traitement des eaux industrielles » au sens de la présente invention, on entend notamment toute composition utile, en particulier, comme agent de clarification et / ou de purification des eaux issues des activités humaines ou industrielles ou destinées aux dites activités, telles que par exemple les eaux destinées à l'alimentation humaine ou animale, les rejets des industries du textile et du cuir, du papier et du carton, d'extraction des minerais, des industries agro-alimentaires et des abattoirs.

Comparativement aux diverses sources de matières amylacées constituées par les céréales et les tubercules, celles constituées par les amidons de légumineuses, notamment de pois, sont susceptibles de répondre aux impératifs essentiels et peuvent être considérées comme facilement accessibles, dans de bonnes conditions, notamment économiques.

Les travaux relatifs à la cationisation d'amidons issus de légumineuses, réalisés à ce jour, sont, à la connaissance de la Demanderesse, réduits.

La demande de brevet internationale WO 97/10385 décrit, dans son exemple 4, l'utilisation d'une farine de pois broyée, traitée par α-amylase, correspondent à une teneur en protéines déclarée de 10 à 15%.

Le brevet européen EP 0 620 121 décrit l'utilisation très particulière d'amidon de pois dans les papiers autocopiants sans carbone. ,

Dans le même domaine d'application tout à fait spécifique, les brevets US 3 996 060 et 3 996 061 préfèrent un amidon de pois classifié.

Dans le cadre de ces papiers dits « NCR », sensibles à la pression, l'amidon est utilisé à l'état granulaire. Il est éventuellement réticulé pour garantir cet état mais, en tout état de cause, il n'est nul besoin de faire appel à des amidons cationiques.

La demande de brevet internationale WO 96/09327 décrit un procédé de cationisation susceptible de concerner, entre autres matières amylacées et notamment les amidons de maïs cireux ou « waxy », l'amidon de pois en utilisant pour milieu réactionnel un mélange d'eau et de solvant miscible dans l'eau, de préférence un alcool, notamment l'éthanol, celui-ci intervenant dans des proportions importantes, de préférence comprises entre 35 et 75% du total eau et alcool.

Dans le document cité, l'usage d'un système binaire eau / solvant organique, seul revendiqué, est justifié par la propension que peuvent avoir certains amidons à gélatiniser, au moins partiellement, lors d'une modification en milieu totalement aqueux.

Une telle gélatinisation, même partielle, est effectivement rédhibitoire, notamment pour les raisons évoquées dans le document, d'aptitude à la filtration et / ou à la centrifugation. Elle est ici relevée très forte pour l'amidon de maïs waxy, dit cireux, limitée mais réelle avec l'amidon de pois.

L'homme de l'art s'assure, le plus couramment, de l'absence de gonflement de l'amidon dans le milieu réactionnel alcalin en ajoutant, audit milieu, des sels tels que chlorure ou sulfate de sodium.

Cette demande de brevet préconise, en lieu et place, prétextant la nécessité de récupération de l'inhibiteur de gonflement, l'usage obligatoire d'un solvant organique et ne revendique, en conséquence, que des systèmes l'associant à l'eau.

La cationisation en phase sèche est aussi rejetée au titre de l'hétérogénéité qu'elle est déclarée inscrire du fait d'une transformation réputée limitée à la surface des granules.

D'une manière plus générale, on comprend à la lecture du document qu'il n'est pas aisé de conférer un caractère cationique à un amidon de pois selon les procédures simples et classiques en milieu sec, semi-sec ou aqueux.

On comprend, en particulier, qu'il est déjà malaisé d'atteindre, en milieu aqueux, un degré de substitution aussi faible que 0,034.

On comprend aussi que, dans le cadre de la réaction en milieu hydroalcoolique, et c'est là un inconvénient majeur à sa pratique, il n'est pas facile d'obtenir un degré de substitution élevé.

L'article intitulé « Functional Properties of Cationic Pea Starch », extrait des « Proceedings of an International Conference: Starch Structure and Functionality » - 1997, pages 36 à 41, émanant de l'Université de SASKATCHEWAN confirme, s'il en était besoin, cette difficulté en ne présentant que des degrés de substitution (D.S.) de 0,02, 0,04 et 0,06, soit respectivement, des taux d'azote voisins de 0,15%, 0,3% et 0,45%, lesquels constituent des niveaux de transformation faibles, notamment en regard de la densité cationique que l'amidon doit aujourd'hui manifester pour être efficace dans le cadre de la gestion de circuits très fermés et / ou de cellulose fortement recyclée.

La demande internationale WO 01/96403 décrit un procédé de cationisation d'amidon ayant une richesse moyenne en amylose de 20%, et plus particulièrement des amidons de pomme de terre cationiques, permettant des niveaux de transformation plus importants avec des teneurs d'azote entre 0,5% et 1,05% (exemples 1 ou 8).

Le document C. Yook et al. « Effects of Cationization on Functional Properties of Pea and Corn Starches », Starch-Stärke, vol. 46, n° 10, 1994, pages 393-399 a pour objectif de déterminer les effets produits par la cationisation des amidons de pois en comparaison aux amidons de maïs. Dans le cadre de ces essais dont la réaction de cationisation est conduite en solution, les taux d'azote restent cependant faibles et ne dépassent pas 0,5%.

Il est ainsi du mérite de la Demanderesse d'avoir pu déterminer qu'il était tout à fait possible de conduire une réaction visant à fonctionnaliser un amidon de pois pour le rendre cationique, que ce soit en phase sèche, semi-sèche ou aqueuse, et notamment de parvenir à des degrés de substitution (ou des taux d'azote) bien supérieurs aux valeurs précédemment affichées, sans qu'il y ait le moindre risque d'une gélatinisation même partielle.

Le procédé selon la présente invention consiste en un procédé de cationisation en phase sèche d'un amidon issu de légumineuses, consistant en la réaction de l'amidon, sous forme granulaire ou gélatinisée, avec un réactif cationique, caractérisé en ce que la réaction est conduite en la seule présence d'eau, et en l'absence totale de tout autre composé solvant, dans des conditions telles que le rapport R de la quantité d'eau à la quantité d'amidon issu de légumineuses soit compris entre 1/500 et 1/5.

Par « quantité d'amidon issu de légumineuses », on entend le poids d'amidon issu de légumineuses initialement mis en oeuvre en vue de la réaction de cationisation, notamment avant toute étape éventuelle de mise en suspension ou de gélatinisation. Ce poids comprend le poids d'eau intrinsèquement contenu dans cet amidon initial. Ce poids d'eau représente moins de 20%, généralement de 5 à 18% et le plus souvent de 10 à 15% du poids d'amidon initial mis en oeuvre.

Par « quantité d'eau », on entend le poids de toute l'eau ajoutée à l'amidon initial en vue de la cationisation de celui-ci, sans tenir compte de l'eau intrinsèquement contenue dans ledit amidon. Cette eau peut être ajoutée selon de multiples variantes, en une ou plusieurs fois, de manière concomitante ou non à l'un quelconque des autres composants du milieu réactionnel résultant. Cette quantité d'eau comprend l'eau éventuellement utilisée pour :
- préparer un lait ou une colle d'amidon à partir de l'amidon issu de légumineuses initial,
- diluer le réactif cationique, l'agent alcalin et / ou tout autre produit mis en oeuvre en vue de la réaction de cationisation.

De manière avantageuse, dans le procédé de cationisation de la présente invention, la réaction de l'amidon avec un réactif cationique est conduite en présence d'un agent alcalin.

De préférence, la réaction de l'amidon avec un réactif cationique du procédé de cationisation de l'invention est réalisée à un pH égal ou supérieur à 8, de préférence supérieur à 10.

Le procédé selon l'invention est avantageusement caractérisé en ce que le réactif cationique est une amine tertiaire ou un sel d'ammonium quaternaire.

Le procédé selon l'invention permet de préparer un amidon cationique, issu de légumineuses, caractérisé en ce qu'il présente un taux d'azote compris entre 0,5 et 1,5%.

Compte tenu de ce qui a été dit précédemment, la Société Demanderesse considère d'ailleurs qu'un amidon issu de légumineuses cationique présentant un taux d'azote compris entre 0,5 et 1,5%, constitue un nouveau produit industriel.

Un tel amidon et plus généralement tout amidon cationique issu de légumineuses selon la présente invention est notamment utile, sous sa forme soluble, comme additif dans la préparation de compositions d'agents de collage utilisées en papeterie, réactifs avec la cellulose, tels que les anhydrides d'acides alkényl succiniques (ASA) et les alkylcétène dimères (AKD), ou non.

Il peut être préconisé, toujours sous forme soluble, dans la préparation de compositions contenant des azurants optiques, des colorants et / ou des polymères synthétiques, notamment des polyacrylamides ou des polyvinylamines.

Il est aussi utilement ajouté sous forme de colle diluée ou pulvérisé comme additif dans la partie humide d'une machine à papier, seul ou en association avec d'autres agents, notamment des amidons anioniques comme décrit, par exemple, dans le brevet européen EP 0 282 415 ou la demande de brevet internationale WO 00/75425, déposés par la Demanderesse, en tant qu'agent de rétention de fines fibres et de charges, notamment minérales ou comme agent d'égouttage et / ou pour l'amélioration des caractéristiques physiques des papiers.

Il peut encore participer à l'élaboration d'une composition amylacée particulière, notamment aqueuse, contenant au moins un amidon cationique, issu de légumineuses, solubilisé, ledit amidon cationique présentant, de préférence, une masse moléculaire moyenne en poids inférieure à 50 millions de daltons, de préférence inférieure à 5 millions de daltons, obtenue par un traitement d'hydrolyse réalisé avant, pendant et / ou après sa cationisation, de préférence, après sa cationisation.

Ladite composition amylacée, notamment aqueuse, ainsi obtenue est alors utile comme agent de réduction des substances gênantes contenues dans les circuits d'eau et / ou retenues sur les équipements de procédés, notamment papetiers.

Ainsi, l'amidon cationique issu de légumineuses, notamment de pois, intéresse tout procédé de fabrication de papier, caractérisé en ce qu'il met en oeuvre ledit amidon cationique ( ou toute composition amylacée le contenant ) dans les circuits de préparation et / ou de partie humide d'une machine à papier, notamment par l'intermédiaire d'une composition de collage, d'une composition contenant au moins un agent choisi parmi les azurants optiques, les colorants et les polymères synthétiques, notamment les polyacrylamides et les polyvinylamines, d'une composition utile comme agent de réduction des substances gênantes contenues dans les circuits d'eau et / ou retenues sur les équipements de procédés, notamment papetiers et / ou directement au sein de la suspension de pâte cellulosique, sous la forme d'une colle aqueuse diluée, comme agent de rétention de fines et de charges, notamment minérales, d'égouttage et / ou d'amélioration des caractéristiques physiques du papier.

Il concerne encore tout papier ou carton plat obtenu par tout procédé faisant appel, à ces divers titres, à un amidon cationique issu de légumineuses selon l'invention (ou toute composition amylacée en contenant) et susceptible de contenir ledit amidon cationique.

Il a été notamment observé que, à l'inverse des affirmations de l'art antérieur, il était possible de modifier, un amidon de légumineuses, notamment de pois, par un réactif cationique, quelle que soit son origine et, notamment, sa teneur en amylose.

De préférence, la teneur en amylose, de l'amidon de légumineuses, est supérieure à 30%.

En effet, l'observation a montré que, dans ces conditions plus particulières notamment, toute gélification, même partielle en milieu aqueux pouvait être évitée, cela même dans le cadre de la fixation d'un nombre important de groupements cationiques, correspondant à des D.S. et des taux d'azote élevés.

La réaction de cationisation de l'amidon de légumineuses consiste à introduire un groupe cationique sur l'amidon et est réalisée par réaction chimique, en condensant un réactif cationique sur un groupement hydroxyle de l'amidon.

La réaction de cationisation peut être effectuée de manière connue en soi, à l'aide de réactif cationiques tels que décrits par exemple dans « Starch Chemistry and Technology - Vol. II - Chapter XVI - R.L. WHISTLER and E.F. PASCHALL - Académic Press (1967).

La réaction peut être conduite en phase aqueuse, l'amidon se présentant, en toute généralité, sous forme granulaire ou gélatinisée, les conditions de température, de temps et de catalyse étant bien connues de tout homme de l'art.

D'une façon parallèle, la réaction peut être conduite en phase sèche, sous les mêmes formes, granulaire ou gélatinisée.

De préférence, la réaction de cationisation est effectuée sur un amidon sous forme granulaire, en milieu alcalin et avec des réactifs azotés à base d'amines tertiaires ou de sels d'ammonium quaternaires.

Suivant un mode de réalisation avantageux, le réactif cationique est de forme époxy ou de forme chloro répondant respectivement aux formules suivantes : 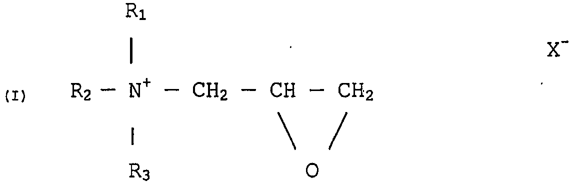 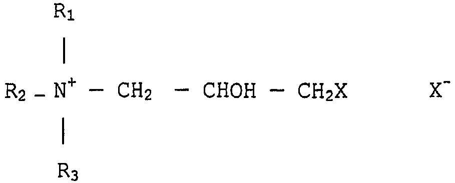 correspondant à des dérivés tertiaires ou quaternaires suivant que l'un des substituants de l'atome d'azote est un hydrogène ou non, lesdits substituants étant, dans la mesure où ils ne sont pas un atome d'hydrogène, de préférence identiques et choisis parmi les radicaux méthyle ou éthyle, X étant Cl, Br ou I et X⁻ étant Cl⁻, Br⁻ ou I⁻.

Le réactif cationique correspond à l'une des deux formules reproduites ci-dessus dans lesquelles R₁, R₂ et R₃ sont, en outre, de préférence identiques et choisis parmi les radicaux méthyle et éthyle, l'un des substituants R₁, R₂ ou R₃ pouvant être un atome d'hydrogène.

Parmi ces réactifs, on préfère utiliser les chlorhydrates de 2-dialkylaminochloréthane tels que le chlorhydrate de 2-diéthylaminochloréthane ou les halogénures de glycidyl-triméthylammonium et leurs halohydrines, tels que le chlorure de N-(3-chloro-2-hydroxypropyl)-triméthylammonium, ce dernier réactif étant préféré.Les taux de réactif mis en oeuvre sont alors choisis de telle sorte que les amidons cationiques résultants présentent le taux d'azote désiré.

Les amidons cationiques issus de légumineuses ainsi obtenus présentent de bonnes aptitudes à la mise en solution par tout moyen thermique ou thermomécanique, continu ou discontinu, notamment à la vapeur vive, et / ou chimique, en particulier au moyen d'un agent alcalin.

On préfère, plus particulièrement, les amidons cationiques issus de légumineuses, notamment de pois dont la teneur en amylose est comprise entre 30 et 60%.

Dans ces conditions, les solutions sont aisément préparées et présentent ensuite des propriétés rhéologiques très satisfaisantes. Le comportement face à la rétrogradation, en particulier, est remarquable.

On n'exclut pas toutefois les amidons cationiques issus de légumineuses dont la teneur en amylose est plus élevée que 60%. Les conditions de préparation des solutions n'en seront qu'un peu plus vigoureuses, sans être rédhibitoires.

Plus précisément, et au regard de considérations relatives aux taux d'amylose et aux degrés de substitution, on peut suggérer, par exemple, en tenant compte des facilités d'approvisionnement d'amidons de légumineuses, notamment de pois, d'associer de préférence un taux d'amylose élevé, facteur d'augmentation du point de gélatinisation, notamment dans des conditions alcalines, et un D.S. élevé, facteur participant à sa diminution.

A l'inverse, il est possible d'envisager et de privilégier un D.S. relativement faible pour un taux d'amylose faible.

De telles considérations sont par ailleurs assorties d'autres possibilités offertes par la prise en compte d'amidons modifiés, en particulier préalablement, tels que les amidons issus de légumineuses, notamment de pois, hydrolysés, oxydés, estérifiés, éthérifiés, réticulés, aptes à se substituer avantageusement aux amidons natifs pour la cationisation.

Dans ce cadre, notamment, les produits cationiques conformes à l'invention ou obtenus selon le procédé de l'invention peuvent être des amidons amphotères, c'est-à-dire des amidons qui peuvent présenter, outre les groupements cationiques qui sont l'objet principal de l'invention, des groupements anioniques, en particulier des groupements phosphatés, naturels et / ou apportés, sulfonés, carboxyméthylés, sulfatés, succinylés, notamment sulfo-succinylés, comme préconisés, notamment, dans le brevet européen EP 282 415, au nom de la demanderesse.

Il est encore possible de fixer, avantageusement, des groupements anioniques hydrophobes, notamment par estérification par un anhydride d'acide dicarboxylique, en particulier, ramifié, comme il est décrit dans le brevet européen EP 742 316, ou modifié par n-alcényl-succinylation, notamment par n-octényl-succinylation ou n-dodécyl-succinylation, comme décrit dans le brevet européen EP 786 476, tous deux au nom de la Demanderesse.

Plus particulièrement aussi, la réticulation, par tout moyen connu de l'homme de l'art, est un paramètre de choix pour assurer la conduite de la réaction de cationisation sans aucun risque de gélatinisation ou même de manifestation plus limitée mais éventuellement néfaste telle qu'un simple gonflement de l'amidon.

La Société Demanderesse considère d'ailleurs que les amidons de légumineuses cationiques selon la présente invention, et qui en outre sont réticulés, constituent également de nouveaux produits industriels, particulièrement d'intérêt dans le domaine papetier.

L'étape de réticulation peut avoir été menée antérieurement, simultanément et / ou postérieurement à l'étape de cationisation.

A l'utilisation des amidons cationiques selon l'invention sur une machine à papier, dans les conditions habituelles d'ajout d'une colle diluée, soit en un point proche de la caisse de tête, mais aussi d'incorporation plus en amont du circuit ou de pulvérisation, seul ou en association avec d'autres agents, notamment des amidons anioniques comme décrit, par exemple, dans le brevet européen EP 0 282 415 ou la demande de brevet internationale WO 00/75425, déposés par la Demanderesse, on note une bonne rétention des fines fibres et des charges, notamment minérales, assortie d'un bon égouttage traduit notamment par des vitesses de machine performantes.

Les caractéristiques physiques traditionnelles telles que les résistances à la rupture (LR), à l'éclatement (Indice Müllen), à la déchirure ou la rigidité sont, sans autre variation, susceptibles de satisfaire l'homme de l'art, en particulier, comparativement à d'autres amidons de céréales ou de tubercules, cationiques.

Il en est de même pour les propriétés optiques comme, par exemple, la blancheur, l'opacité, pour les propriétés de surface telles le lissé ou la rugosité, et pour les aptitudes dites d'imprimabilité.

Les quantités d'amidon cationique selon l'invention, introduites dans les circuits de préparation et / ou de partie humide d'une machine à papier, soit au sein de la suspension de pâte cellulosique, sous la forme d'une colle aqueuse diluée, comme agent de rétention de fines et de charges, notamment minérales, d'égouttage et / ou d'amélioration des caractéristiques physiques du papier, sont déterminées en fonction des caractéristiques recherchées ou privilégiées par l'homme de l'art en regard, notamment, de la pâte cellulosique utilisée, du milieu aqueux et de son environnement.

Elles sont équivalentes, à un même degré de substitution, aux quantités, d'amidons cationiques issus de céréales ou de tubercules, utilisées.

A ce titre, la Société Demanderesse souligne que les amidons de légumineuses cationiques selon l'invention, réticulés ou non, peuvent, si on le souhaite, être associés à des amidons issus de céréales et / ou de tubercules, notamment à des amidons cationiques, réticulés ou non, issus de céréales et / ou de tubercules destinés au domaine papetier.

Cette association peut notamment se faire par le biais de compositions amylacées consistant en des mélanges se présentant sous toutes formes (solides, pâteuses ou liquides) et associant, en toutes proportions, au moins un amidon issu de légumineuses cationique selon l'invention et au moins un amidon issu de céréale ou de tubercule, de préférence cationique.

De même, l'amidon cationique issu de légumineuses conforme à l'invention peut être associé à un amidon anionique, ledit amidon anionique étant issu de céréales, de tubercules et / ou de légumineuses.

Cette association peut revêtir la forme décrite dans le brevet européen EP 282 415 par laquelle on introduit dans la composition fibreuse, en deux ou plusieurs points de l'installation papetière, séparément l'un de l'autre, ledit amidon cationique d'une part, et ledit amidon anionique d'autre part.

Elle est encore exprimée, avantageusement, par de nouvelles compositions amylacées contenant au moins un amidon cationique issu de légumineuses conforme à l'invention et au moins un amidon anionique, ledit amidon anionique étant de préférence issu de céréales, de tubercules et / ou de légumineuses.

De telles associations, qui correspondent notamment à celles décrites dans le brevet français FR 2 794 479, au nom de la Demanderesse, présentent toutefois, par rapport aux compositions qui y sont décrites, des avantages sensibles comme il apparaît dans les exemples 11, 12 et 15.

L'exemple 11 montre l'intérêt de compositions comprenant 75% d'un amidon de pois cationique, notamment réticulé, et 25% d'un amidon de maïs anionique, en particulier, en termes d'égouttage et de caractéristiques physiques.

L'exemple 12 met en évidence les excellentes propriétés présentées par une composition comportant un amidon de pois cationique et un amidon de pois anionique, dans des proportions identiques aux précédentes.

L'amidon de pois anionique peut avantageusement être succinylé ou sulfo-succinylé et ce, avec un degré de substitution (D.S.) compris entre 0,01 et 1, notamment entre 0,02 et 0,50.

La Société Demanderesse considère, à ce propos, que de nombreux amidons de légumineuses anioniques sont des nouveaux produits. C'est en particulier le cas des dérivés sulfo-succinylés.

L'exemple 15 s'attache à démontrer que les proportions peuvent varier sensiblement. Pour un ratio 55/45, les performances demeurent tout à fait satisfaisantes.

Que l'association soit conforme à la description de l'un ou l'autre des deux brevets cités précédemment, européen EP 282 415 ou FR 2 794 479, l'amidon anionique peut, hors le fait d'être issu de diverses sources botaniques, contenir divers groupements choisis parmi les groupements phosphatés, naturels et / ou apportés, les groupements sulfonés, carboxyméthylés, sulfatés, succinylés, notamment sulfo-succinylés, ainsi que des groupements hydrophobes, notamment des esters d'acide dicarboxylique, en particulier, ramifié, ou n-alcényl-succinylés, notamment n-octényl-succinylés ou n-dodécyl-succinylés.

Les différentes amylacées décrites font partie intégrante de la présente invention.

Sur un autre plan, il a été constaté que les amidons cationiques selon l'invention se prêtent particulièrement bien à la réalisation d'émulsions ou de dispersions d'agents de collage de toutes sortes, qu'ils soient réactifs avec la cellulose comme notamment les cétène dimères ou les cétène multimères, les anhydrides d'acides, en particulier succiniques, les isocyanates organiques, ou non réactifs comme les colophanes ou leurs dérivés, les acides gras et leurs dérivés, les résines acides, leurs esters ou amides, les cires et leurs dérivés, ainsi que les différents mélanges d'agents.

Le comportement des amidons cationiques selon l'invention pour cette utilisation est remarquable, tant en termes de stabilité des colles aux concentrations usitées, de performances à la mise en émulsion ou en dispersion desdits agents de collage, de stabilité desdites émulsions ou dispersions sous forme concentrée, apte au stockage, pour certaines d'entre elles ou sous forme diluée, apte à la mise en oeuvre pour la plus grande majorité.

De même, les amidons cationiques selon l'invention se prêtent particulièrement bien à la préparation de compositions comportant au moins un agent choisi parmi les azurants optiques, les colorants et les polymères synthétiques comme, par exemple, les polyacrylamides et les polyvinylamines.

Dans un autre contexte, il a été remarqué que les amidons cationiques selon l'invention pouvaient convenir pour la réalisation de compositions particulières telles que celles désignées dans la présente invention comme « additif secondaire de papeterie », utile en tant qu'agent de réduction des substances gênantes, notamment de nature anionique, contenues dans les circuits d'eau et / ou retenues sur les équipements des procédés papetiers ou comme « additif de traitement des eaux industrielles », utile pour la clarification et / ou la purification des eaux issues des activités humaines ou industrielles ou destinées aux dites activités.

Le traitement d'hydrolyse pratiqué peut consister avantageusement en une hydrolyse acide, notamment par l'acide chlorhydrique ou, plus avantageusement encore, en une hydrolyse enzymatique, par au moins une enzyme choisie notamment parmi les amylases, notamment les α-amylases, et les transférases, notamment les cyclodextrine glycosyltransférases et les enzymes de branchement.

Les différents aspects de la présente invention, relatifs à l'obtention des amidons cationiques selon l'invention ainsi qu'à leurs comportements dans l'application papetière, vont être décrits de façon plus détaillée à l'aide des exemples qui ne sont aucunement limitatifs.

La Société Demanderesse a aussi observé que de tels amidons cationiques issus de légumineuses, et les diverses compositions qui en contiennent, peuvent être valablement utilisés, par exemple comme agents floculants, viscosifiants, modificateurs de rhéologie, agglomérants ou d'encapsulation, dans d'autres domaines d'application tels que ceux des industries chimiques, de la détergence, des liants hydrauliques, des produits de parement tels que plâtre et enduits, de l'extraction des minerais, du forage, de l'étiquetage, de la cosmétologie, des peintures et des vernis, des encres, des compositions adhésives en général ou des matériaux thermoplastiques.

Les exemples 1, 2, 3, 4, 5, 6, 7, 8 et 9 ne sont pas conformes à l'invention.

### Exemple 1 : Cationisation en phase lait

On dispose d'un amidon de pois dont la teneur en amylose est de 36,7% et la teneur en eau intrinsèque est de 12% environ. A partir de cet amidon initial, on prépare un lait aqueux à 35% de matières sèches, lequel est porté à une température de 39°C.

On y ajoute 13,8% d'une solution à, 50% de chlorure de 3-chloro-2 hydroxypropyltriméthylammonium ce pourcentage exprimant la quantité de ladite solution rapportée à l'amidon initial.

On amène ensuite la préparation en milieu alcalin par 2,7% de soude sèche par rapport à l'amidon initial, ajoutée sous forme d'une solution à 35 g/l.

On obtient ainsi un milieu réactionnel de départ présentant un rapport R tel que défini précédemment de l'ordre de 2,35 / 1 environ.

La réaction est maintenue pendant 15 heures.

Elle est arrêtée par neutralisation à l'acide chlorhydrique commercial jusqu'à un pH de 7 (+/-0,5).

On filtre puis on sèche.

On obtient ainsi un amidon de pois cationique présentant un taux d'azote fixé de 0,43%, correspondant à un degré de substitution (D.S.)de 0,052.

### Exemple 2 : Cationisation par voie sèche

A l'aide d'un mélangeur rapide, de marque LODIGE, type CB, on mélange de la façon la plus homogène :
l'amidon de pois initial tel que décrit dans l' exemple 1,
11,04% d'une solution à 50% de chlorure de 3-chloro-2 hydroxypropyltriméthylammonium, rapporté à l'amidon initial mis en oeuvre et,
1,73% de soude sèche par rapport à l'amidon initial, sous la forme d'une solution à 50%.

Le mélange obtenu (R = 1/15,7) est ensuite réchauffé à 65°C environ et maintenu dans un ensemble de maturation pendant 6 à 7 heures.

Après cationisation, une solution d'acide citrique, à 50%, est ensuite pulvérisée sur le mélange de réaction, à la sortie de l'ensemble de maturation, à raison de 1,2% de ladite solution exprimé par rapport à la matière commerciale.

On obtient alors un amidon de pois cationique présentant un taux d'azote fixé de 0,39%, correspondant à un degré de substitution (D.S.) de 0,047.

### Exemple 3 :

Un amidon cationique a été élaboré à partir d'un amidon de pois présentant une richesse en amylose de 36,7% et dénommé AP1, pour un taux d'azote de 0,44%.

Un second l'a été à partir d'un amidon de pois de même richesse en amylose mais, de plus, réticulé avec 30 parties par million (30 ppm) de trimétaphosphate de sodium, et appelé APR1, pour un taux d'azote fixé, identique, de 0,44%.

Ils sont comparés à quatre produits , soit un amidon de maïs cationique AM1, un mélange cationique d'amidon de maïs et de fécule de pomme de terre 50/50, réticulé AMPR1, deux fécules de pommes de terre de cationicités différentes FP1 et FP2, présentant, respectivement, un taux d'azote fixé de 0,63%, 0,55%, 0,37% et 0,65%.

Des colles sont préparées sur « Jet-Cooker », soit en continu, pendant 1 minute à 120°C, et de façon à ce que leur matière sèche finale soit de 2%.

Elles sont, sous cette forme, soumises à une évaluation rhéologique sur le rhéomètre « CARRI-MED CSL²500 », en géométries coaxiales 13,83/15 mm, sur une rampe de température de 60°C à 5°C en 75 minutes.

La fréquence de sollicitation sinusoïdale est fixée à F = 1Hz, la contrainte à 20 µN.m.

La méthode permet d'estimer la stabilité des colles au refroidissement en évaluant leur température de transformation de solution vraie en gel, correspondant à la température de rétrogradation, par le suivi des modules, élastiques et visqueux.

| | % Azote | Température sol / gel |
|---|---|---|
| FP1 | 0,37 | Inférieure à 5°C |
| FP2 | 0,65 | Inférieure à 5°C |
| AP1 | 0,44 | Inférieure à 5°C |
| APR1 | 0,44 | Inférieure à 5°C |
| AM1 | 0,63 | Supérieure à 60°C |

De manière particulièrement surprenante et inattendue, eu égard à leur teneur relativement élevée en amylose notamment, les colles d'amidons de pois cationiques présentent une stabilité remarquable au refroidissement.

En effet, à la manière des colles de fécules de pomme de terre cationiques, elles ne rétrogradent pas sur la plage des températures considérées, de 60 à 5°C.

### Exemple 4 :

Des colles sont de nouveau préparées comme pratiquées dans l'exemple 3, soit sur « Jet-Cooker », pour une matière sèche finale de 2%.

On utilise de nouveau le rhéomètre « CARRI-MED CSL²500 en géométries coaxiales 13,83/15 mm.

On appréhende, cette fois, les viscosités en courbe de montée, respectivement, à 500 s⁻¹ et à 10 s⁻¹ dans un cycle pendant lequel l'appareil est thermostaté à 60°C, et on exprime le rapport Rc = Viscosité courbe montée à 500 s⁻¹ / Viscosité courbe à 10 s⁻¹.

On enregistre les valeurs suivantes :

| | Rc |
|---|---|
| FP1 | 0,300 |
| FP2 | 0,386 |
| AP1 | 0,413 |
| APR1 | 0,420 |
| AM1 | 0,157 |

Des valeurs de Rc élevées permettent de prévoir une bonne résistance au cisaillement et, notamment, un excellent comportement sous contraintes mécaniques ultérieures. C'est très manifestement le cas avec les amidons de pois cationiques, qu'ils soient réticulés ou pas, puisqu'ils affichent des valeurs sensiblement plus élevées que celles obtenues avec les amidons de céréales ou de tubercules.

### Exemple 5 :

Des colles sont préparées sur « Jet-Cooker », soit en continu, pendant 1 minute à 120°C mais la matière sèche finale est maintenant de 4%.

A partir de chacune d'elles, des émulsions sont réalisées en laboratoire sur « Bol CENCO » à une vitesse de 20 000 tours par minute (trs/mn), pendant 5 minutes et à 50°C, avec un anhydride d'acide alkényl succinique en C18, selon un ratio R1 amidon cationique / ASA égal à 0,4.

Les émulsions obtenues sont diluées 10 fois par une colle du même amidon cationique de façon à ce que, notamment, le ratio R2 amidon cationique / ASA soit égal à 0,8 et l'on observe leur stabilité.

Après 24 heures de stockage desdites émulsions diluées à température ambiante, on constate, et de façon parfaitement manifeste, que les deux préparations à base d'amidon de pois cationique, réticulé ou non, sont stables, alors que les émulsions à base d'amidon de maïs ou de fécule de pomme de terre, cationiques ne le sont pas.

### Exemple 6 :

Les émulsions diluées obtenues dans l'exemple 5 précédent sont mises en oeuvre, pour le collage interne d'un papier, dans une fourniture constituée de 80% de pâte kraft blanchie et 20% de cassés couchés, à raison de 0,25% sec par rapport à la pâte sèche.

La suspension ainsi obtenue reçoit ensuite 30% de carbonate de calcium comptés par rapport à la pâte sèche, puis 0,6% du même amidon cationique de masse.

On relève, pour le fonctionnement de la machine et pour le collage, les valeurs suivantes :

| | % Azote | Rétention toile (%) | Rétention charges (%) | Cobb (g/m²) |
|---|---|---|---|---|
| FP1 | 0,37 | 87,6 | 73,9 | 26 |
| FP2 | 0,65 | 87 | 76,8 | 24 |
| AP1 | 0,44 | 84,8 | 72,8 | 26 |
| APR1 | 0,44 | 85,2 | 72,1 | 27 |
| AM1 | 0,63 | 86,6 | 74 | 31,4 |

Les mesures de collage Cobb montrent que le comportement de l'amidon de pois cationique est très proche de ce point de vue de celui de la fécule de pomme de terre cationique et bien supérieur à celui de l'amidon de maïs cationique.

De façon synthétique, si l'on tient compte de la stabilité des colles, de la stabilité des émulsions, des caractéristiques de collage observées, les amidons de pois cationiques révèlent des performances particulièrement intéressantes de ces points de vue.

### Exemple 7 :

Il s'agit, dans ce cas, d'aborder l'influence de contacts longs lorsque les amidons cationiques sont introduits en un point situé en amont du circuit.

Pour cela, on reprend les conditions de cuisson de l'exemple 3 et l'on compare directement les produits AP1 et AMPR1 lorsqu'ils sont introduits dans une pâte constituée de 52% de pâte de résineux et 48% de pâte de feuillus, ayant reçue en sus 61% de cassés exprimés par rapport à l'ensemble résineux + feuillus.

La dose envisagée est de 1,2% d'amidon cationique sec par rapport à l'ensemble de la pâte.

Le temps de contact entre pâte et amidon cationique est de 6 minutes, selon une séquence durant laquelle les cisaillements sont intenses.

On juge de la résistance au cisaillement des amidons cationiques et de la faculté de maintien des liaisons inter-fibres, par le test « Scott-Bond », bien connu de l'homme de l'art.

| | Cohésion interne (Scott-Bond) |
|---|---|
| 1,2% AMPR1 | 230 J/m² |
| 1,2% AP1 | 255 J/m² |
| sans amidon cationique | 180 J/m² |

L'amidon de pois cationique améliore significativement la cohésion interne, notamment en comparaison à l'effet d'un mélange cationique d'amidon de maïs et de fécule de pomme de terre (50/50).

On peut notamment en trouver une explication dans l'exemple 4 exprimant la conservation du caractère visqueux de la colle d'amidon de pois cationique.

En toute hypothèse, cet aspect conjugué à la capacité de résistance au cisaillement, serait susceptible de conduire à une très bonne dispersion de l'amidon cationique et de renforcer le potentiel de liaisons inter-fibres.

### Exemple 8 :

Dans ce nouvel exemple, le principe de temps de contact long n'est préservé que partiellement, en considérant deux points d'adjonctions d'amidon de pois cationique l'une en amont (0,6%), pour un temps de contact de 5 minutes, l'autre à l'entrée de la caisse de tête (0,3%), comparativement à un amidon de maïs cationique et, comme dans l'exemple 7, à un mélange cationique d'amidon de maïs et de fécule de pomme de terre.

De surcroît, l'amidon de pois cationique est utilisé pour la confection d'une émulsion avec anhydride d'acide alkényl succinique, de façon similaire à celle exploitée dans l'exemple 5.

On reprend, sur ces nouvelles bases, la même composition fibreuse que dans l'exemple 6, ainsi que le même taux de charges (carbonate de calcium).

On enregistre les résultats suivantes :

| 0,6% + 0,3% d'amidon cationique | Collage Cobb 60 | Cohésion interne |
|---|---|---|
| AM1 | 23 | 165 |
| AMPR1 | 22 | 165 |
| AP1 | 19 | 185 |
| APR1 | 19 | 180 |
| sans | 38 | 130 |

L'amidon de pois cationique ajouté dans la masse apporte, toutes conditions étant égales par ailleurs, comparé à des produits de l'art antérieur, un meilleur caractère hydrophobe et augmente la résistance du papier au délaminage.

### Exemple 9 :

On reprend les compositions de l'exemple 8. On procède, en toute première étape, à des mesures d'égouttage sur les suspensions de pâte ayant reçu une colle d'un amidon cationique AP1 ou APR1 ou une colle d'amidon cationique FP1 ou AMPR1.

| 0,6% + 0,3% d'amidon cationique | Temps d'égouttage (en secondes) |
|---|---|
| FP1 | 10,6 |
| AMPR1 | 10,17 |
| AP1 | 9,93 |
| APR1 | 7,8 |

Le temps d'égouttage diminue sensiblement avec l'utilisation d'amidon cationique AP1 ou APR1, comparativement à des produits cationiques FP1 ou AMPR1.

C'est tout particulièrement le cas avec un amidon de pois réticulé cationique (APR1).

### Exemple 10 :

A partir du même amidon de pois initial que celui décrit dans les exemples précédents, on a préparé conformément à l'invention, respectivement :
un amidon de pois cationique présentant un taux d'azote de 0,55% et obtenu à partir d'un mélange réactionnel dont le rapport R était ajusté à 2 / 1 environ,
un amidon de pois cationique présentant un taux d'azote de 0,63% et obtenu à partir d'un mélange réactionnel dont le rapport R était ajusté à 1 / 15 environ.

Ces produits se sont révélés aussi performants, voire plus performants pour certains aspects, non seulement que les amidons de légumineuses cationiques décrits dans les exemples précédents, mais également que la fécule de pomme de terre FP2 sus-décrite.

En particulier, ces deux produits ont permis d'obtenir :
- des émulsions d'agents de collage stables et présentant, en termes de collage Cobb, des performances égalant ou dépassant celles décrites pour la fécule de pomme de terre FP2 dans l'Exemple 6,
- des performances en termes de collage Cobb et de cohésion interne encore améliorées en regard de celles décrites au niveau de l'Exemple 8,
- des performances en termes d'égouttage supérieures à celles obtenues par ailleurs avec ladite fécule FP2.

Cet exemple montre non seulement qu'il est désormais possible de préparer des amidons issus de légumineuses cationiques présentant un taux d'azote au moins égal à 0,5% mais qu'en outre, de tels produits nouveaux permettent d'atteindre, dans le domaine papetier en général et en particulier dans la préparation d'agents de collage et / ou dans la partie humide de la machine à papier, des performances remarquables que l'art antérieur ne permettait aucunement de soupçonner.

### Exemple 11 :

Sur des amidons de pois natifs, prélevés sur un assortiment ayant une richesse en amylose de 35,3%, on réalise diverses réactions de cationisation selon la procédure dite par voie sèche, exposée dans l'exemple 2. Certains d'entre eux sont en outre, postérieurement, réticulés avec le trimétaphosphate de sodium (TMPNa).

On dispose de trois dérivés cationiques d'amidon de pois :
- réf.073 : 0,67% d'azote,
- réf.074 : 0,68% d'azote - réticulé à 40 ppm (parties par million) de TMPNa,
- réf.076 :0,67% d'azote - réticulé à 80ppm de TMPNa

Chacun d'eux fait l'objet, comparativement à HI-CAT®1286A, une fécule de pomme de terre cationique commercialisée par la Société Demanderesse, d'un assemblage de 75 parties d'amidon cationique pour 25 parties de VECTOR®A080, un amidon de maïs à caractère anionique commercialisé par la Société Demanderesse.

Les divers couples obtenus:
- C₁ : 75% HI-CAT®1286A + 25% VECTOR®A080,
- C₂ : 75% 073 + 25% VECTOR®A080,
- C₃: 75% 074 + 25% VECTOR®A080,
- C₄: 75% 076 + 25% VECTOR®A080,
sont comparés après mélange et cuisson simultanée des deux composants, conformément à la demande de brevet internationale WO 00/75425. On utilise un appareillage de cuisson en continu (Jet-Cooker). Les divers paramètres sont :
- température de cuisson : 120°C,
- temps : 1 minute,
- dureté de l'eau : 10°TH,
- Matières sèches : lait : 10%, finale : 2%.

Chaque couple est ajouté à une pâte de vieux papiers, à raison de 2%, dans le but d'améliorer l'égouttage de cette pâte jugée « colmatante », tout en préservant les propriétés physiques du papier obtenu.

| | Egouttage | Tests physiques | | | |
|---|---|---|---|---|---|
| | | Gram. g/m² | Scott-Bond J/m² | Indice d'éclat. kPa/g/m² | Cendres à 450°C (%) |
| C₁ | 19,55 | 124 | 318 | 2,50 | 7,0 |
| C₂ | 19,61 | 123,5 | 319 | 2,51 | 6,6 |
| C₃ | 19,93 | 125,5 | 312 | 2,45 | 6,35 |
| C₄ | 18,49 | 123 | 321 | 2,55 | 5,8 |

Le but est aisément atteint avec l'échantillon référencé 076, soit correspondant à l'amidon de pois cationique ayant subi la plus forte réticulation.

### Exemple 12 :

Sur ces observations, des essais complémentaires sont entrepris dans les mêmes conditions de cuisson et d'ajout à une pâte similaire à celle de l'exemple 11.

Un mélange (C₅) d'amidon de pois cationique et d'amidon de pois anionique (75/25) est confronté au même couple HI-CAT®1286A/VECTOR®A080.

A ces fins, on prépare, à partir d'un amidon de pois natif prélevé sur l'assortiment à 35,3% d'amylose, un dérivé sulfocarboxyalkylé (Réf. A) selon les enseignements du brevet européen EP 0 282 415, en ayant recours à l'anhydride maléique.

Le lait d'amidon de pois à 34% de matières sèches (MS) et à 25°C est placé en milieu légèrement oxydant et régulé à pH 6,5 par de la soude. Il reçoit 4,7% de phosphate monosodique anhydre (sec/sec).

Puis, dans des conditions de pH régulé à 7,0, 5,9% (sec/sec) d'anhydride maléique sont ajoutés sur une période de 3 heures et 30 minutes. Au-delà de ce temps, l'action est encore poursuivie 1 heure .

Le lait est filtré puis réajusté à 36,5% MS. On lui ajoute 6,3% de sulfate de sodium (sec/sec). Le pH est ajusté à 8,0. On apporte alors 20% de bisulfite de sodium commercial, comptés par rapport à l'amidon sec et on laisse en contact durant 10 heures. Enfin, on filtre et on sèche.

Deux taux d'introduction à la pâte sont étudiés : 2% comme précédemment, et 4%, niveau réputé élevé :

| | | Egouttage | Tests physiques | | | |
|---|---|---|---|---|---|---|
| | | | Gram. g/m² | Scott-Bond J/m² | Indice d'éclat. KPa/g/m² | Cendres 450°C (%) |
| 2% | C₁ | 18,14 | 124 | 365 | 2,66 | 6,8 |
| | C₅ | 17,35 | 122,5 | 332 | 2,74 | 6,5 |
| 4% | C₁ | 21,93 | 127 | 421 | 3,03 | 6,9 |
| | C₅ | 19,64 | 126 | 416 | 2,82 | 6,65 |

Les performances à l'égouttage sont confirmées. Cette propriété est préservée au taux d'amidon élevé.

La cohésion interne et, en particulier, l'indice d'éclatement atteignent de très satisfaisantes valeurs.

### Exemple 13 :

Sur une autre fourniture à 100% de vieux papiers, on procède à une comparaison entre HI-CAT®5283A, mélange cationique (0,64% d'azote), à base d'amidon de céréale et d'amidon de tubercule, commercialisé par la Société Demanderesse, d'une part, et les amidons de pois cationiques réf. 073 et réf. 076, d'autre part, en les ajoutant à ladite pâte à un taux de 1%.

Les données comparées, en partie humide de la machine, sont les suivantes :

| | Rétention totale (en %) | Rétention des charges (en %) | Egouttage (Akribi) |
|---|---|---|---|
| HI-CAT®5283A | 83,1 | 70,4 | 15,7 |
| Réf. 076 | 82,9 | 71,9 | 16,1 |
| Réf. 073 | 82,7 | 71,5 | 15,2 |

Les différences, à ce niveau de 1%, sont faibles.

Les caractéristiques essentielles ont été appréciées sur les papiers :

| | Grammage (g/m²) | Scott-Bond (J/m²) | Indice d'Eclatement (kPa/g/m²) | Cendres à 450°C (%) |
|---|---|---|---|---|
| HI-CAT®5283A | 127,0 | 265 | 1,78 | 8,25 |
| Réf. 076 | 127,5 | 290 | 1,84 | 8,40 |
| Réf. 073 | 128,0 | 287 | 1,77 | 8,30 |

L'amidon de pois cationique, notamment réticulé, permet d'accéder, pour des conditions de marche voisines, à de meilleures caractéristiques physiques.

### Exemple 14 :

On procède comme dans l'exemple 13, avec les mêmes produits et la même pâte, mais à un niveau d'introduction sensiblement plus élevé, soit 3%.

En partie humide de la machine, on observe :

| | Rétention totale (en %) | Rétention des charges (en %) | Egouttage (Akribi) |
|---|---|---|---|
| HI-CAT®5283A | 84,0 | 72,2 | 19,5 |
| Réf. 076 | 84,1 | 73,2 | 18,1 |
| Réf. 073 | 84,0 | 73,0 | 18,2 |

On note, avec les amidons de pois cationiques, hors la tendance à une meilleure rétention des charges, un meilleur égouttage à ce taux d'introduction élevé.

Caractéristiques du papier :

| | Grammage (g/m²) | Scott-Bond (J/m²) | Indice d'Eclatement (kPa/g/m²) | Cendres à 450°C |
|---|---|---|---|---|
| HI-CAT®5283A | 128,0 | 327 | 1,80 | 8,30 |
| Réf. 076 | 129,0 | 325 | 2,00 | 8,40 |
| Réf. 073 | 129,5 | 323 | 1,90 | 8,30 |

Le taux d'introduction élevé (3,5%) est bénéfique à la résistance à l'éclatement du papier.

### Exemple 15 :

Un nouvel amidon de pois cationique est préparé comme défini dans l'exemple 11, soit réf.078 : 0,8% d'azote - réticulé à 80 ppm de TMPNa.

A partir de ce dérivé selon l'invention et de produits cationiques de l'art antérieur, on procède à la préparation de mélanges comme décrit dans l'exemple 11 mais, cette fois, dans un ratio correspondant à 55% d'amidon cationique pour 45% d'amidon anionique.

Les divers couples obtenus:
- D₁ : 55% Réf.078 + 45% VECTOR®A080,
- D₂ : 55% Réf.078 + 45% Amidon de pois anionique sulfo-succinylé, de D.S. 0,052,
- D'₂ : 55% Réf.078 + 45% Amidon de pois anionique succinylé, de D.S. 0,051,
- D₃: 55% 074 + 45% VECTOR®AS104 commercialisé par la Société Demanderesse,
- D₄: 55% mélange cationique (céréale + tubercule
- 0,73% d'azote) + 45% VECTOR®A080,
sont comparés comme exposé dans l'exemple 11, après cuisson simultanée des deux composants.

Chaque couple est ajouté à la pâte à 100% de vieux papiers des exemples 13 et 14, à raison de 3,5% et on procède aux contrôles et mesures décrits :

**Mesures en partie humide de la machine :**

| | Rétention totale (en %) | Rétention des charges (en %) | Egouttage (Akribi) |
|---|---|---|---|
| D₁ | 83,0 | 72,1 | 14,6 |
| D₂ | 83,0 | 71,6 | 14,0 |
| D'₂ | 83,2 | 72,0 | 14,1 |
| D₃ | 84,5 | 73,1 | 18,0 |
| D₄ | 82,9 | 71,5 | 13,0 |

Si D₃ présente des performances rédhibitoires à l'égouttage, les autres mélanges testés ont des comportements voisins, notamment D₂ et D'₂ confectionnés à partir de dérivés d'amidon de pois exclusivement.

Caractéristiques du papier :

| | Grammage (g/m²) | Scott-Bond (J/m²) | Indice d'Eclatement (kPa/g/m²) | Cendres à 450°C |
|---|---|---|---|---|
| D₁ | 127,0 | 300 | 1,80 | 8,4 |
| D₂ | 126,8 | 295 | 1,75 | 8,2 |
| D'₂ | 127,2 | 300 | 1,80 | 8,1 |
| D₃ | 127,0 | 305 | 1,92 | 8,5 |
| D₄ | 127,3 | 300 | 1,67 | 8,3 |

Le couple D₁, associant amidon de pois cationique et amidon de maïs anionique, confère des propriétés physiques d'autant plus intéressantes qu'elles sont à rapprocher d'un comportement sur machine remarquable.

## Revendications

1. Procédé de cationisation en phase sèche d'un amidon issu de légumineuses, consistant en la réaction de l'amidon issu de légumineuses, sous forme granulaire ou gélatinisée, avec un réactif cationique, **caractérisé en ce que** la réaction est conduite en la seule présence d'eau, et en l'absence totale de tout autre composé solvant, dans des conditions telles que le rapport R de la quantité d'eau à la quantité d'amidon issu de légumineuses, soit compris entre 1/500 et 1/5, étant entendu que la quantité d'amidon issu de légumineuses comprend le poids d'amidon issu de légumineuses initialement mis en oeuvre en vue de la réaction de cationisation ainsi que le poids d'eau y étant intrinsèquement contenu, et
**caractérisé en ce que** l'amidon cationique obtenu présente un taux d'azote compris entre 0,5 et 1,5 %.

2. Procédé selon la revendication 1, **caractérisé en ce que** la réaction est conduite en présence d'un agent alcalin.

3. Procédé selon la revendication 1 ou 2, **caractérisé en ce que** la réaction est conduite à un pH égal ou supérieur à 8, de préférence supérieur à 10.

4. Procédé selon l'une quelconque des revendications 1 à 3, **caractérisé en ce que** le réactif cationique est une amine tertiaire ou un dérivé d'ammonium quaternaire.

5. Amidon cationique issu de légumineuses, **caractérisé en ce qu'**il est obtenu par mise en oeuvre du procédé selon l'une quelconque des revendications 1 à 4.

6. Amidon cationique issu de légumineuses, **caractérisé en ce qu'**il présente un taux d'azote compris entre 0,5 et 1,5 %.

7. Amidon cationique issu de légumineuses selon l'une quelconque des revendications 5 à 6, **caractérisé en ce qu'**il est réticulé.

8. Amidon cationique issu de légumineuses selon l'une quelconque des revendications 5 à 7, **caractérisé en ce que** l'amidon est amphotère, tout groupement anionique porté par ledit amidon étant de préférence choisi dans le groupe comprenant les groupements phosphatés, sulfonés, carboxyméthylés, sulfatés, succinylés, notamment sulfosuccinylés, ainsi que les groupements anioniques hydrophobes, notamment, les groupements esters d'acide dicarboxylique et les groupements n-alcényl-succinylés.

9. Amidon cationique selon l'une quelconque des revendications 5 à 7, **caractérisé en ce que** l'amidon cationique issu de légumineuses présente une masse moléculaire moyenne en poids inférieure à 50 millions de daltons, de préférence inférieure à 5 millions de daltons, obtenue par un traitement d'hydrolyse réalisé avant, pendant et/ou après sa cationisation, de préférence après sa cationisation.

10. Composition amylacée, notamment aqueuse, **caractérisée en ce qu'**elle contient au moins un amidon cationique issu de légumineuses selon l'une quelconque des revendications 5 à 9.

11. Composition amylacée selon la revendication 10, **caractérisée en ce qu'**elle contient en outre au moins un amidon de céréale ou de tubercule, de préférence cationique.

12. Composition amylacée selon la revendication 10, **caractérisée en ce qu'**elle contient en outre au moins un amidon anionique, de préférence choisi dans le groupe comprenant les amidons anioniques de céréales, de tubercules et de légumineuses.

13. Utilisation d'un amidon cationique issu de légumineuses selon l'une quelconque des revendications 5 à 9 ou d'une composition amylacée selon l'une quelconque des revendications 10 à 12, comme additif dans la préparation de compositions d'agents de collage utilisées en papeterie, dans la préparation de compositions contenant au moins un agent choisi parmi les azurants optiques, les colorants et les polymères synthétiques, et/ou dans la partie humide d'une machine à papier, en tant qu'agent de rétention, agent d'égouttage et/ou pour l'amélioration des caractéristiques physiques des papiers.

14. Utilisation d'un amidon cationique issu de légumineuse selon l'une quelconque des revendications 5 à 9 ou d'une composition amylacée selon l'une quelconque des revendications 10 à 12, comme agent de réduction des substances gênantes contenues dans les circuits d'eau et/ou retenues sur les équipements de procédés, notamment papetiers.

15. Utilisation d'un amidon cationique issu de légumineuses ou d'une composition amylacée selon l'une quelconque des revendications 13 ou 14 dans un procédé de fabrication de papier.

## Patentansprüche

1. Verfahren zur Kationisierung einer Leguminosenstärke in Trockenphase, umfassend die Reaktion der Leguminosenstärke, in granulärer oder gelatinierter Form, mit einem kationischen Reaktionsmittel, **dadurch gekennzeichnet, dass** die Reaktion in der ausschließlichen Gegenwart von Wasser und in totaler Abwesenheit jeglicher anderen Lösungsmittelverbindung, unter Bedingungen, dass das Verhältnis R der Menge Wasser zu der Menge Leguminosenstärke zwischen 1/500 und 1/5 liegt, wobei es sich versteht, dass die Menge Leguminosenstärke das Gewicht der Leguminosenstärke, das anfänglich in der Kationisierungsreaktion eingesetzt wird, als auch das Gewicht von Wasser, das inhärent darin enthalten ist, umfasst, und
**dadurch gekennzeichnet, dass** die erhaltene kationische Stärke einen Stickstoffgehalt zwischen 0,5 und 1,5 % aufweist.

2. Verfahren nach Anspruch 1, **dadurch gekennzeichnet, dass** die Reaktion in der Gegenwart eines alkalischen Mittels durchgeführt wird.

3. Verfahren nach Anspruch 1 oder 2, **dadurch gekennzeichnet, dass** die Reaktion bei einem pH-Wert gleich oder über 8, vorzugsweise über 10, durchgeführt wird.

4. Verfahren nach einem der Ansprüche 1 bis 3, **dadurch gekennzeichnet, dass** das kationische Reaktionsmittel ein tertiäres Amin oder ein quartäres Ammoniumderivat ist.

5. Kationische Leguminosenstärke, **dadurch gekennzeichnet, dass** sie erhalten wird durch Anwenden des Verfahrens nach einem der Ansprüche 1 bis 4.

6. Kationische Leguminosenstärke, **dadurch gekennzeichnet, dass** sie einen Stickstoffgehalt zwischen 0,5 und 1,5 % aufweist.

7. Kationische Leguminosenstärke, nach einem der Ansprüche 5 bis 6, **dadurch gekennzeichnet, dass** sie vernetzt ist.

8. Kationische Leguminosenstärke, nach einem der Ansprüche 5 bis 7, **dadurch gekennzeichnet, dass** die Stärke amphoter ist wobei, jede anionische Gruppe, die auf der Stärke vorliegt, vorzugsweise ausgewählt ist aus der Gruppe, umfassend die Phospat-, Sulfon-, Carboxymethyl-, Sulfat-, Succin-, insbesondere Sulfosuccinyl-Gruppierungen, sowie aus den anionischen hydrophoben Gruppierungen, insbesondere den Dicarbonsäureester-Gruppierungen und den n-Alkenyl-succinylen.

9. Kationische Leguminosenstärke, nach einem der Ansprüche 5 bis 7, **dadurch gekennzeichnet, dass** die kationische Leguminosenstärke eine mittlere Molekulargewichtsmasse unter 50 Millionen Dalton, vorzugsweise unter 5 Millionen Dalton aufweist, erhalten durch eine Hydrolysebehandlung, die vor, während und/oder nach ihrer Kationisierung, vorzugsweise nach ihrer Kationisierung, erfolgt.

10. Amylierte Zusammensetzung, insbesondere wässrig, **dadurch gekennzeichnet, dass** sie mindestens eine kationische Leguminosenstärke nach einem der Ansprüche 5 bis 9 enthält.

11. Amylierte Zusammensetzung nach Anspruch 10, **dadurch gekennzeichnet, dass** sie außerdem mindestens eine Getreide- oder Knollenstärke, vorzugsweise kationisch, enthält.

12. Amylierte Zusammensetzung nach Anspruch 10, **dadurch gekennzeichnet, dass** sie außerdem mindestens eine anionische Stärke enthält, vorzugsweise ausgewählt aus der Gruppe, umfassend die anionischen Getreide-, Knollen- und Leguminosenstärken.

13. Verwendung einer kationischen Leguminosenstärke nach einem der Ansprüche 5 bis 9 oder einer amylierten Zusammensetzung nach einem der Ansprüche 10 bis 12, als Additiv bei der Herstellung von Klebemittelzusammensetzungen, die in der Papierindustrie verwendet werden, bei der Herstellung von Zusammensetzungen, die mindestens ein Mittel enthalten, ausgewählt aus den optischen Aufhellern, den Farbstoffen und den synthetischen Polymeren und/oder in dem Naßbereich einer Papiermaschine, als ein Retentionsmittel, Entwässerungsmittel und/oder zur Verbesserung physikalischer Charakteristika von Papieren.

14. Verwendung einer kationischen Leguminosenstärke nach einem der Ansprüche 5 bis 9 oder einer amylierten Zusammensetzung nach einem der Ansprüche 10 bis 12, als Mittel zur Verringerung von störenden Substanzen, die in Wasserkreisläufen enthalten sind oder auf den
Verfahrensausstattungen, insbesondere bei der Papierherstellung, zurückgehalten werden.

15. Verwendung einer kationischen Leguminosenstärke oder einer amylierten Zusammensetzung nach einem der Ansprüche 13 oder 14 in einem Papierherstellungsverfahren.

## Claims

1. A method for the cationization in dry phase of a legume-derived starch, consisting of the reaction of the legume-derived starch, in a granular or gelatinized form, with a cationic reagent, **characterized in that** the reaction is carried out in the sole presence of water, and in the complete absence of any other solvent compound, under conditions such that the ratio R of the quantity of water to the quantity of legume-derived starch is between 1/500 and 1/5, the quantity of legume-derived starch comprising the weight of legume-derived starch initially used for the cationization reaction and the weight of water intrinsically contained in it, and **characterized in that** the obtained cationic starch has a nitrogen level of between 0.5 and 1.5%.

2. The method as claimed in claim 1, **characterized in that** the reaction is carried out in the presence of an alkaline agent.

3. The method as claimed in any one of claim 1 or 2, **characterized in that** the reaction is carried out at a pH equal to or greater than 8, preferably greater than 10.

4. The method as claimed in any one of claims 1 to 3, **characterized in that** the cationic reagent is a tertiary amine or a quaternary ammonium derivative.

5. A legume-derived cationic starch, **characterized in that** it is obtained using the method as claimed in any one of claims 1 to 4.

6. A legume-derived cationic starch, **characterized in that** it has a nitrogen level of between 0.5 and 1.5%.

7. The legume-derived cationic starch as claimed in any one of claims 5 to 6, **characterized in that** it is crosslinked.

8. The legume-derived cationic starch as claimed in any one of claims 5 to 7, **characterized in that** the starch is amphoteric, wherein any anionic group carried by said starch is preferably selected from the group comprising phosphated, sulfonated, carboxymethylated, sulfated, succinylated, in particular sulfosuccinylated, groups, and hydrophobic anionic groups, in particular dicarboxylic acid ester groups and n-alkenylsuccinylated groups.

9. The cationic starch as claimed in any one of claims 5 to 7, **characterized in that** said legume-derived cationic starch has a weight-average molecular mass of less than 50 million daltons, preferably less than 5 million daltons, obtained by a hydrolysis treatment carried out before, during and/or after its cationization, preferably after its cationization.

10. A starchy composition, in particular aqueous, **characterized in that** it contains at least one legume-derived cationic starch as claimed in any one of claims 5 to 9.

11. A starchy composition as claimed in claim 10, **characterized in that** it also contains at least one cereal or tuber, preferably cationic, starch.

12. Starchy composition as claimed in claim 10, **characterized in that** it also contains at least one anionic starch, preferably selected from the group comprising cereal, tuber and legume anionic starches.

13. The use of a legume-derived cationic starch as claimed in any one of claims 5 to 9 or of a starchy composition as claimed in any one of claims 10 to 12, as an additive in the preparation of sizing agent compositions used in paper-making, in the preparation of compositions containing at least one agent selected from optical brighteners, dyes and synthetic polymers, and/or in the wet end of a paper-making machine, as retention agent, dewatering agent and/or for improving the physical characteristics of paper.

14. The use of a legume-derived cationic starch as claimed in any one of claims 5 to 9 or of a starchy composition as claimed in any one of claims 10 to 12, as agent for reducing interfering substances contained in water circuits and/or retained on process equipment, in particular paper-making equipment.

15. The use of a legume-derived cationic starch or a starchy composition as claimed in any one of claims 13 or 14 in a method for the manufacture of paper.
